# EUROPÄISCHE PATENTANMELDUNG

(11) **EP 4 542 793 A1**
(43) Veröffentlichungstag der Anmeldung: **23.04.2025**
(21) Anmeldenummer: 23204913.0
(22) Anmeldetag: 20.10.2023
(51) Int. Cl.: H01R 43/28, B21F 23/00

(54) **KABELVERARBEITUNGSMASCHINE UND VERFAHREN ZUM SELEKTIVEN AUFNEHMEN EINER KABEL-FÜHRUNGSEINHEIT AUS EINEM MAGAZIN EINER KABELVERARBEITUNGSMASCHINE**

(71) Anmelder: komax Holding AG, 6036 Dierikon (CH)
(72) Erfinder: GUT, Daniel, 6353 Weggis (CH); ULRICH, Kurt, 6370 Stans (CH)
(74) Vertreter: EGLI-EUROPEAN PATENT ATTORNEYS

(57) **Zusammenfassung**

Eine Kabelverarbeitungsmaschine (100) umfasst einen kabelzuführungsseitigen Schwenkarm (120), ein Magazin (150) für eine Mehrzahl von Kabel-Führungseinheiten (130-1...130-6) und eine am Schwenkarm (120) angeordnete automatisch betätigbare Fixiereinrichtung (121) für eine Kabel-Führungseinheit (130-1...130-6) zum selektiven Aufnehmen einer Kabel-Führungseinheit (130-1...130-6) aus dem Magazin (150) gemäss einem Führungseinheit-Auswahlsignal. Die Kabelverarbeitungsmaschine (100) verschwenkt auf den Empfang des Führungseinheit-Auswahlsignals hin den Schwenkarm (120) zu einer zugehörigen Position relativ zum Magazin (150) und nimmt die ausgewählte Kabel-Führungseinheit (130-1...130-6) unter Verwendung der Fixiereinrichtung (121) aus dem Magazin (150) auf.

## Beschreibung

### TECHNISCHES GEBIET

Ausführungsformen der vorliegenden Offenbarung betreffen eine Kabelverarbeitungsmaschine und ein Verfahren zum selektiven Aufnehmen einer Kabel-Führungseinheit aus einem Magazin einer Kabelverarbeitungsmaschine.

### STAND DER TECHNIK

Kabelverarbeitungsmaschinen werden verwendet, um automatisiert einen oder mehrere Vorgänge an Kabeln, insbesondere an Kabelenden, durchzuführen. Es ist dabei wünschenswert, dass ein- und dieselbe Kabelmaschine für eine Vielzahl von Kabeln Verwendung findet, die ggf. unterschiedliche Eigenschaften aufweisen. Solche Unterschiede betreffen beispielsweise den Kabelquerschnitt, die Isolationsstärke und dergleichen.

Wenn ein anderes Kabel verarbeitet werden soll, ist es bekannt, das Kabel zu wechseln. Für einen solchen Wechsel ist es teilweise erforderlich, auch ein zugehöriges Führungsrohr und einen zugehörigen Führungsschlauch zu wechseln, in die das Kabel eingefädelt werden muss. Das Dokument EP 1 548 902 B1 offenbart in diesem Kontext eine zugehörige Einfädelhilfe. Aus dem Dokument EP 1 548 903 B1 ist eine Technik bekannt, bei der eine Kabelverarbeitungsmaschine eine Zuführungseinrichtung umfasst, die ein mit mehreren Führungsrohren bestückbares Magazin anfahren kann. Nach Aufnahme eines Führungsrohres muss ein Kabel weiterhin eingefädelt werden, d. h. der Kabelwechsel selbst ist nicht automatisiert. Es besteht daher ein Bedarf an einer Kabelverarbeitungsmaschine, bei der ein Kabelwechsel automatisiert vorgenommen werden kann.

### ZUSAMMENFASSUNG DER ERFINDUNG

Es werden eine Kabelverarbeitungsmaschine gemäss Anspruch 1 und ein Verfahren gemäss Anspruch 10 zum selektiven Aufnehmen einer Kabel-Führungseinheit aus einem Magazin der Kabelverarbeitungsmaschine angegeben. Vorteilhafte Weiterbildungen sind in den abhängigen Ansprüchen angegeben.

Gemäss einem Aspekt weist eine Kabelverarbeitungsmaschine einen kabelzuführungsseitigen Schwenkarm, ein Magazin für eine Mehrzahl von Kabel-Führungseinheiten und eine am Schwenkarm angeordnete automatisch betätigbare Fixiereinrichtung für eine Kabel-Führungseinheit auf. Die Fixiereinrichtung dient zum selektiven Aufnehmen einer Kabel-Führungseinheit aus dem Magazin gemäss einem Führungseinheit-Auswahlsignal. Die Kabelverarbeitungsmaschine ist derart konfiguriert, dass sie auf den Empfang des Führungseinheit-Auswahlsignals hin den Schwenkarm zu einer zugehörigen Position relativ zum Magazin verschwenkt und die ausgewählte Kabel-Führungseinheit unter Verwendung der Fixiereinrichtung aus dem Magazin aufnimmt.

Gemäss einem weiteren Aspekt wird ein Verfahren zum selektiven Aufnehmen einer Kabel-Führungseinheit aus einem Magazin einer Kabelverarbeitungsmaschine angegeben. Die Kabelverarbeitungsmaschine weist einen kabelzuführungsseitigen Schwenkarm, das Magazin (150) und eine am Schwenkarm angeordnete automatisch betätigbare Fixiereinrichtung für die Kabel-Führungseinheit auf. Das Verfahren umfasst ein Empfangen eines Führungseinheit-Auswahlsignals, das die Kabel-Führungseinheit im Magazin bezeichnet, ein Verschwenken des Schwenkarms zu einer zugehörigen Position relativ zum Magazin, und - unter Verwendung der Fixiereinrichtung - ein Aufnehmen der ausgewählten Kabel-Führungseinheit aus dem Magazin.

### KURZE BESCHREIBUNG DER ZEICHNUNGEN

Ausführungsformen werden unter Bezugnahme auf die Zeichnungen erläutert. In den Zeichnungen zeigen:
Fig. 1 eine ausschnittsweise perspektivische Ansicht einer Kabelverarbeitungsmaschine gemäss dem Stand der Technik.
Fig. 2 eine ausschnittsweise perspektivische Ansicht einer Kabelverarbeitungsmaschine gemäss einer Ausführungsform.
Fig. 3 eine Draufsicht auf einen Teil der Kabelverarbeitungsmaschine aus Fig. 2.
Fig. 4 eine perspektivische Ansicht einer Kabel-Führungseinheit der Kabelverarbeitungsmaschine aus Fig. 2.
Fig. 5 eine perspektivische Ansicht auf einen kabelzuführungsseitigen Schwenkarm und Magazinelemente der Kabelverarbeitungsmaschine aus Fig. 2.
Fig. 6(a) bis 6(d) Seitenansichten eines Ausschnittes der Kabelverarbeitungsmaschine aus Fig. 2 zu unterschiedlichen Zeitpunkten zum Erläutern des verfahrensmässigen Ablaufs gemäss einer Ausführungsform.

### BESCHREIBUNG VON AUSFÜHRUNGSFORMEN

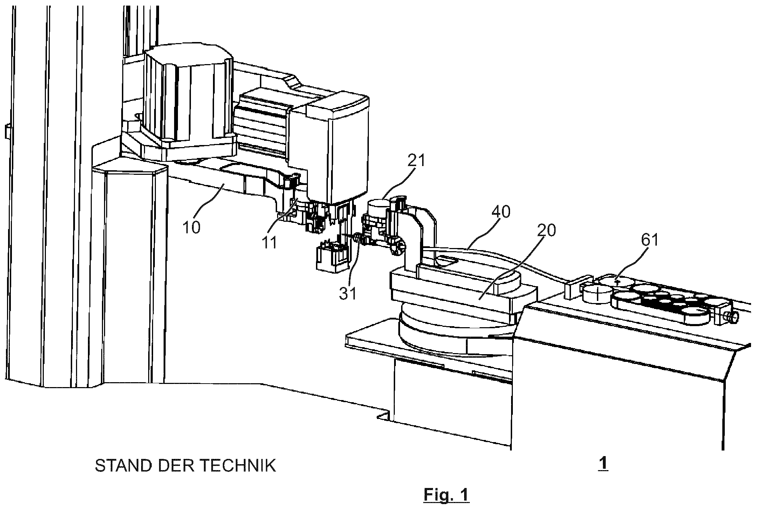

Fig. 1 zeigt einen Teil einer herkömmlichen Kabelverarbeitungsmaschine 1 in perspektivischer Ansicht. Ein Kabel wird von der in der Zeichnung in Fig. 1 rechten Seite zugeführt, beispielsweise von einer Rolle (nicht dargestellt) oder dergleichen. Diese Seite wird als die Kabelzuführungsseite bezeichnet. Zum Zuführen des Kabels dient ein Kabelvorschub 61, an den sich ein Führungsschlauch 40 anschliesst. Ein sich an den Führungsschlauch 30 anschliessendes Führungsrohr 31 ist vor einem Kabelgreifer 21 befestigt. Führungsschlauch 40, Kabelgreifer 21 und Führungsrohr 41 sind an einem kabelzuführungsseitigen Schwenkarm 20 angeordnet. Gegenüber dem kabelzuführungsseitigen Schwenkarm 20 ist ein weiterer Schwenkarm 10 mit einem Kabelgreifer 11 angeordnet, der das zugeführte Kabel übernimmt.

Üblicherweise wird ein Kabel eines bestimmten Querschnitts eingespannt und in der Kabelverarbeitungsmaschine 1 verarbeitet. Das Kabel muss für eine möglichst fehlerfreie Bearbeitung genau geführt werden, wozu der Führungsschlauch 40 und das Führungsrohr 41 einen passenden Innendurchmesser aufweisen. Im Allgemeinen ist der Innendurchmesser insbesondere des Führungsrohrs 41 nur wenig grösser als der Aussendurchmesser des Kabels. Der Kabelgreifer 21 ist beim Längstransport (Vorschub) des Kabels geöffnet, so dass der Kabelvorschub 61 das Kabel durch den Führungsschlauch 40 und das Führungsrohr 41 vorschieben kann.

Bei der herkömmlichen Kabelverarbeitungsmaschine 1 muss bei einem Wechsel des Kabels auf eines mit einem grösseren oder kleineren Aussendurchmesser zumindest das Führungsrohr 41, ggf. auch zusätzlich der Führungsschlauch 40, gewechselt werden, um eine stabile und genaue Führung zu ermöglichen. Hierzu muss das neue Kabel in das neue Führungsrohr 41 eingefädelt werden, was ein manueller Vorgang ist und dementsprechend Zeit kostet.

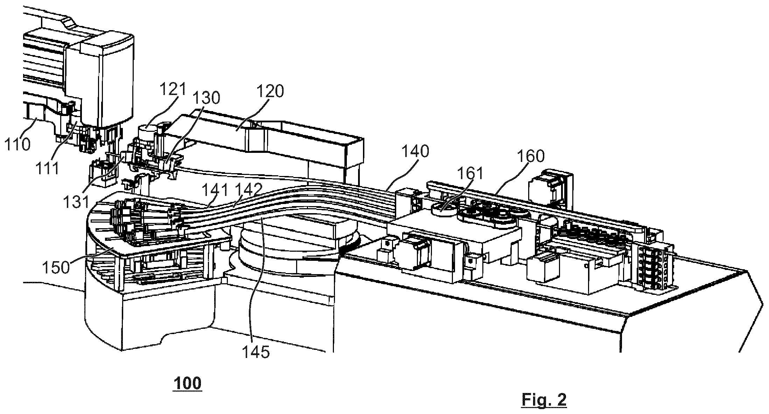

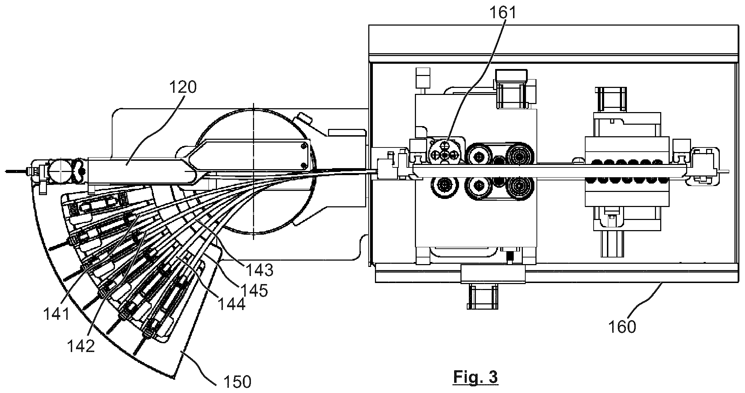

Fig. 2 zeigt in perspektivischer Ansicht - analog zu Fig. 1 - einen Teil einer Kabelverarbeitungsmaschine 100 gemäss der vorliegenden Offenbarung. Fig. 3 zeigt die Elemente aus Fig. 2 in der Draufsicht. Aus Gründen der Übersichtlichkeit werden Fig. 2 und Fig. 3 gemeinsam beschrieben.

Das Kabel wird wiederum von der in der Zeichnung in Fig. 1 rechten Seite zugeführt, beispielsweise von einer Rolle (nicht dargestellt) oder dergleichen. Diese Seite wird als die Kabelzuführungsseite bezeichnet. Zum Zuführen des Kabels dient ein Kabelwechsler 160 mit einem Kabelvorschub 161. Der Kabelwechsler ist beispielsweise ein linearer Kabelwechsler, konfiguriert wie im Dokument EP 1 213 800 B1 beschrieben, dessen Offenbarung hiermit durch Bezugnahme aufgenommen wird. Diese Konfiguration ist jedoch nur beispielhaft, und es sind andere Typen von Kabelwechslern denkbar, beispielsweise rotative oder schwenkbare Kabelwechsler.

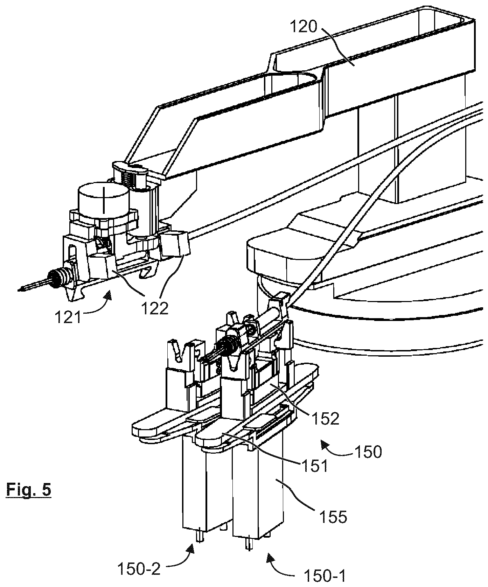

In den Kabelwechsler 160 münden eine Mehrzahl von Führungsschläuchen 140...145, die ggf. unterschiedliche Innendurchmesser aufweisen und dementsprechend Kabel mit jeweils unterschiedlicher Beschaffenheit, z. B. unterschiedlichen Aussendurchmessern aufnehmen. An jeden Führungsschlauch 140...145 schliesst sich eine zugehörige Führungseinheit 130-1...130-6 an. Die Führungseinheiten 130-1...130-6 sind in einem Magazin 150 aufgenommen (siehe auch Fig. 5 und die zugehörige Beschreibung). An einem kabelzuführungsseitigen Schwenkarm 120 ist eine Fixiereinrichtung 121 angeordnet (siehe auch Fig. 5 und die zugehörige Beschreibung). Gegenüber dem kabelzuführungsseitigen Schwenkarm 120 ist ein weiterer Schwenkarm 110 mit einem Kabelgreifer 111 angeordnet, der das zugeführte Kabel übernimmt.

Die Fixiereinrichtung 121 kann automatisch betätigt werden, beispielsweise mittels einer übergeordneten Maschinensteuerung. Die Kabelverarbeitungsmaschine 100 ist derart konfiguriert, dass sie auf den Empfang eines Führungseinheit-Auswahlsignals hin den Schwenkarm 120 zu einer Position am Magazin verschwenkt, an der die Führungseinheit (beispielsweise die bestimmte Art von Führungseinheit) übernommen werden kann, die durch das Führungseinheit-Auswahlsignal bezeichnet wird. Unter Verwendung der Fixiereinrichtung 121 wird dann diese so ausgewählte Führungseinheit 130-1...130-6 aus dem Magazin 150 entgegengenommen bzw. aufgenommen. In der in Fig. 2 gezeigten Ausführungsform ist das Magazin 150 unterhalb des Schwenkbereichs des Schwenkarms angeordnet, und beispielhaft ist die erste der Führungseinheiten (Kabel-Führungseinheit 130-1) an der Fixiereinrichtung 121 des Schwenkarms 120 aufgenommen.

Die Kabel-Führungseinheiten 130-1...130-6 sind zumindest insofern unterschiedlich, als dass sich mindestens eine der Kabel-Führungseinheiten 130-1...130-6 von einer anderen Kabel-Führungseinheit 130-1...130-6 in Bezug auf die Eignung für die Art des von ihr geführten Kabels unterscheidet. Im Regelfall betrifft dies den Aussendurchmesser des geführten Kabels. Beispielsweise ist der Innendurchmesser einer Kabel-Führungseinheit 130-1...130-6 von dem Innendurchmesser mindestens einer anderen der Kabel-Führungseinheiten 130-1...130-6 verschieden.

Weiterhin ist mindestens eine der Kabel-Führungseinheiten 130-1...130-6 mit einem zu führenden Kabel bestückt. Vorzugsweise sind sämtliche der Kabel-Führungseinheiten 130-1...130-6 jeweils mit einem zu führenden Kabel bestückt.

Alle Kabel sind im Kabelwechsler 160 eingelegt, verlaufen durch den zugehörigen Führungsschlauch 140...145 und das zugehörige Führungsrohr und verbleiben dort, auch wenn sich die zugehörige Führungseinheit 130-1...130-6 im Magazin 150 befindet. Ein Kabelwechsel wird ausgeführt, indem der Kabelwechsler 160 verfährt, um das gewünschte Kabel transportieren zu können, und die zugehörige Führungseinheit 130-1...130-6 aus dem Magazin 150 entnommen wird, also in der Fixiereinrichtung 121 aufgenommen wird.

Es sei angemerkt, dass die Anzahl von Kabel-Führungseinheiten 130-1...130-6 in der dargestellten Ausführungsform 6 beträgt, aber auch von 6 verschieden sein kann. Insbesondere beträgt die Anzahl von Kabel-Führungseinheiten 130-1...130-6 mindestens 2.

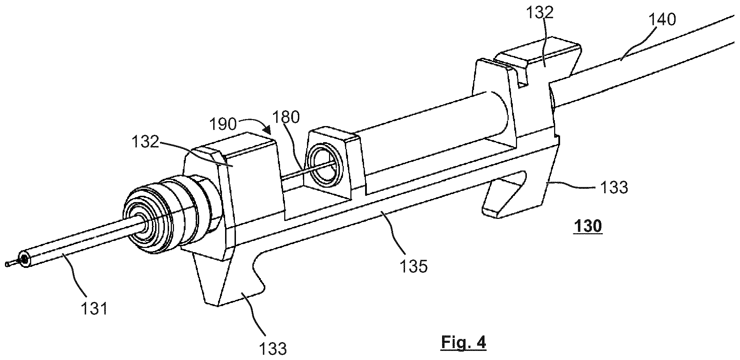

Fig. 4 zeigt eine perspektivische Ansicht einer Führungseinheit, die mit 130 bezeichnet ist und stellvertretend für jede der Kabel-Führungseinheiten 130-1...130-6 steht, auch wenn der Durchmesser beispielsweise von Führungsrohr 131 und/oder Führungsschlauch 140 unterschiedlich sein kann. Die Führungseinheit 130 umfasst einen Träger 135, an dem das Führungsrohr 131 und der Führungsschlauch 140 befestigt sind. Das Kabel 180 ist durch Führungsschlauch 140 und Führungsrohr 131 geführt und tritt am Ende des Führungsrohrs 131 aus diesem aus. Eine Aussparung 190 ermöglicht das Greifen des Kabels und erlaubt bei geöffnetem Kabelgreifer das Schliessen einer Einfädelhilfe (nicht dargestellt). Der Träger 135 weist eine oder mehrere Koppelflächen 132, 133 auf, die beispielsweise keilförmig ausgebildet sind und das Fixieren an einem jeweils zugehörigen Gegenstück am Schwenkarm 120 bzw. Magazin 150 ermöglichen.

Fig. 5 zeigt eine perspektivische Ansicht des Greifarms 120 und eines Teils des Magazins 150. Beispielhaft sind zwei Magazinelemente 150-1, 150-2 gezeigt, wobei im Magazinelement 150-1 eine Kabel-Führungseinheit 130 aufgenommen ist. Es sei angemerkt, dass so viele Magazinelemente am Magazin 150 vorhanden sind, wie es Kabel-Führungseinheiten aufnehmen kann. Die Magazinelemente 150-1, 150-2 sind vorzugsweise gleichartig konfiguriert. Beispielhaft wird die Konfiguration des Magazinelements 150-1 beschrieben. Das Magazinelement 150-1 umfasst eine Hubplatte 151, einen Hubzylinder 155 und eine Spanneinrichtung 152, beispielsweise einen Spannzylinder. Die Fixiereinrichtung 121 am Schwenkarm 120 umfasst eine Klemmeinrichtung 122, beispielsweise einen Klemmzylinder. Im Magazin 150 (in der jeweiligen Magazineinheit 150-1) ist die dort aufgenommene Führungseinheit 130 mit den unteren Koppelflächen 133 ausgerichtet und wird mit der Spanneinrichtung 152 durch Ausüben von Druck auf die unteren Koppelflächen 133 fixiert. Die Hubplatte 151 ist mittels des Hubzylinders 155 vertikal beweglich. In der Fixiereinrichtung 121 sind die oberen Koppelflächen 132 mit der Klemmeinrichtung 122 ausgerichtet und werden durch Ausüben von Druck an dieser fixiert.

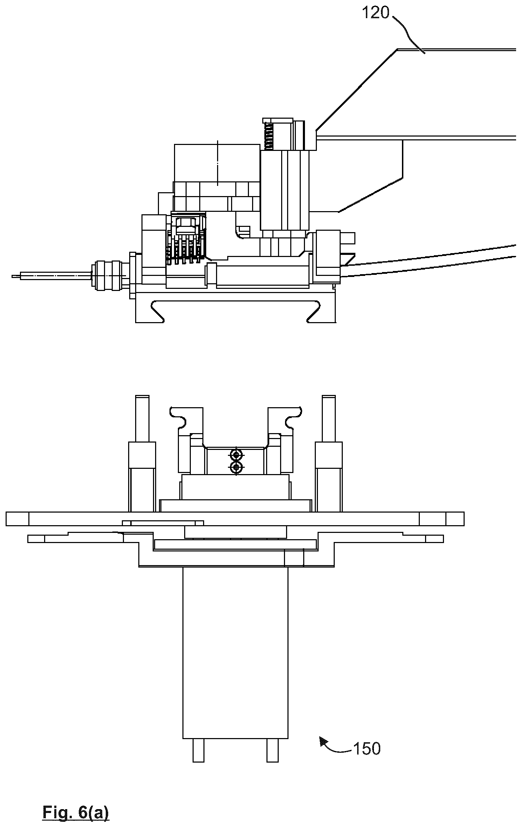

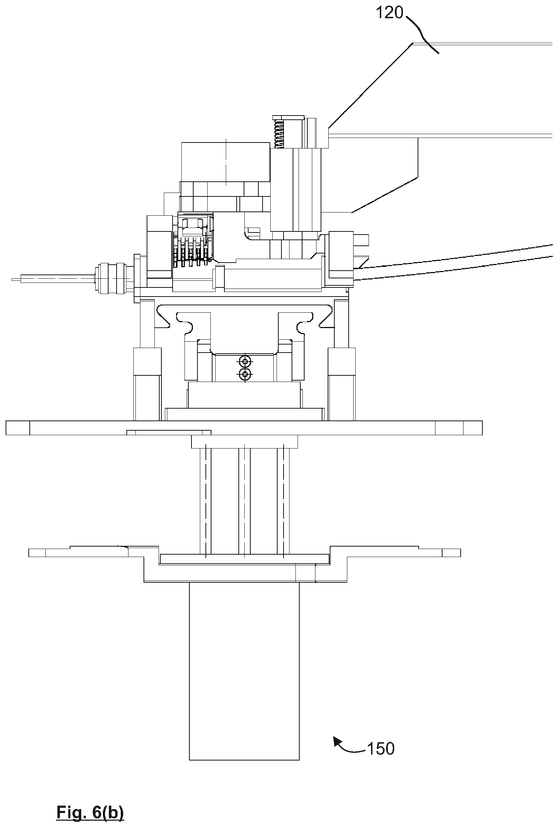

Fig. 6(a) bis 6(d) zeigen eine Schrittfolge eines Verfahrens zur Übergabe einer Führungseinheit 130 vom Schwenkarm 120 an das Magazin 150. In Fig. 6(a) ist der Schwenkarm so verschwenkt worden, dass die Fixiereinrichtung 122 über einem leeren Platz im Magazin 150 (einem leeren Magazinelement 150-1, 150-2) platziert ist. In Fig. 6(b) fährt der Hubzylinder 155 des zugehörigen Magazinelements 150-1, 150-2 nach oben, so dass die auf der Hubplatte 151 angeordnete Spanneinrichtung 152 gegenüber den unteren Koppelflächen 133 der Führungseinheit 130 ausgerichtet ist.

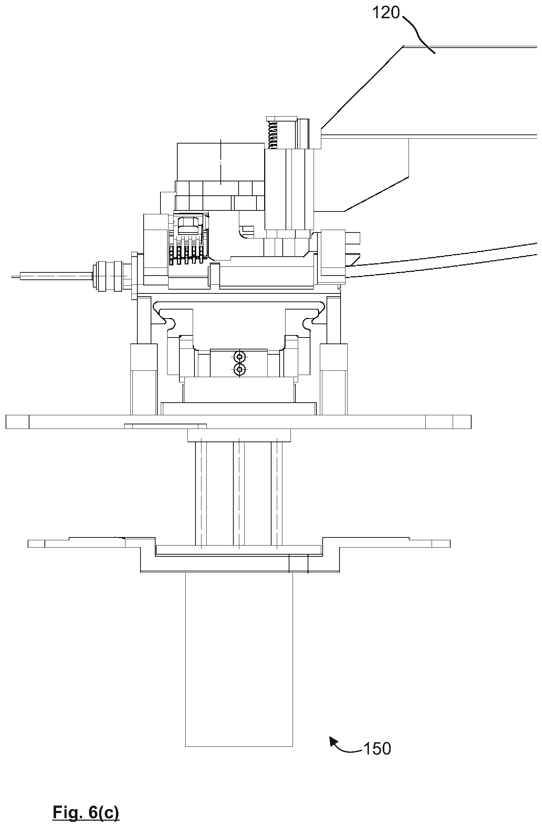

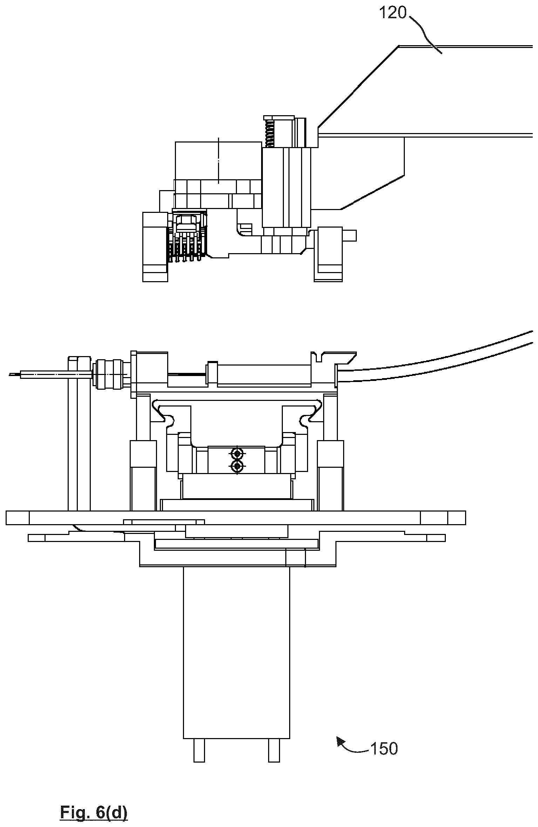

In Fig. 6(c) wird die Klemmeinrichtung 122 an der Fixiereinrichtung 121 des Schwenkarms 120 gelöst, die Spanneinrichtung 152 fährt nach aussen und klemmt damit die Führungseinheit 130. In Fig. 6(d) fährt der Hubzylinder 155 abwärts und hat somit die Führungseinheit 130 übernommen. Im Falle eines Kabelwechsels wird so eine gegenwärtig nicht mehr benötigte Führungseinheit 130 in einem leeren Platz im Magazin 150 (einem leeren Magazinelement 150-1, 150-2) platziert, so dass der Schwenkarm 120 zur Aufnahme einer gegenwärtig benötigten, anderen Führungseinheit 130 bereit ist. Bei einer Übergabe vom Magazin 150 an den Schwenkarm 120 werden dann die oben angeführten Schritte in der umgekehrten Reihenfolge durchgeführt, um die benötigte Führungseinheit 130 zu übernehmen. In dem Fall, dass der Schwenkarm 120 bereits frei von einer Führungseinheit 130 ist, brauchen die Schritte zum Übergeben der Führungseinheit 130 vom Schwenkarm 120 an das Magazin 150 selbstverständlich nicht durchgeführt zu werden; vielmehr kann der Schwenkarm 120 die benötigte Führungseinheit 130 dann direkt aus dem Magazin 150 übernehmen, d. h. die oben angeführten Schritte werden in der umgekehrten Reihenfolge durchgeführt.

## Patentansprüche

1. Kabelverarbeitungsmaschine (100) mit:
- einem kabelzuführungsseitigen Schwenkarm (120);
- einem Magazin (150) für eine Mehrzahl von Kabel-Führungseinheiten (130-1...130-6) ; und
- einer am Schwenkarm (120) angeordneten automatisch betätigbaren Fixiereinrichtung (121) für eine Kabel-Führungseinheit (130-1...130-6) zum selektiven Aufnehmen einer Kabel-Führungseinheit (130-1...130-6) aus dem Magazin (150) gemäss einem Führungseinheit-Auswahlsignal,
wobei die Kabelverarbeitungsmaschine (100) derart konfiguriert ist, dass sie auf den Empfang des Führungseinheit-Auswahlsignals hin den Schwenkarm (120) zu einer zugehörigen Position relativ zum Magazin (150) verschwenkt und die ausgewählte Kabel-Führungseinheit (130-1...130-6) unter Verwendung der Fixiereinrichtung (121) aus dem Magazin (150) aufnimmt.

2. Kabelverarbeitungsmaschine (100) nach Anspruch 1, wobei sich mindestens eine der Kabel-Führungseinheiten (130-1...130-6) von einer anderen der Kabel-Führungseinheiten (130-1...130-6) in Bezug auf die Eignung für die Art des geführten Kabels, insbesondere den Kabelquerschnitt und/oder die Isolationsstärke, unterscheidet.

3. Kabelverarbeitungsmaschine (100) nach einem der vorherigen Ansprüche, wobei mindestens eine der Kabel-Führungseinheiten (130-1...130-6) im Magazin, insbesondere sämtliche Kabel-Führungseinheiten (130-1...130-6), mit einem zu führenden Kabel bestückt ist.

4. Kabelverarbeitungsmaschine (100) nach einem der vorherigen Ansprüche, wobei die Kabel-Führungseinheit (130-1...130-6) einen Träger (135) mit mindestens einer Koppelfläche (132, 133) umfasst, wobei die Koppelfläche (132, 133) zum Zusammenwirken mit der Fixiereinrichtung (121) ausgebildet ist.

5. Kabelverarbeitungsmaschine (100) nach Anspruch 4, wobei die Koppelfläche (132, 133) keilförmig ausgebildet ist.

6. Kabelverarbeitungsmaschine (100) nach einem der vorherigen Ansprüche, wobei die Fixiereinrichtung (121) mindestens eine Klemmeinrichtung (122) umfasst, wobei die Klemmeinrichtung (122) zum Zusammenwirken mit der Kabel-Führungseinheit (130-1...130-6), insbesondere der mindestens einen Koppelfläche (132, 133), ausgebildet ist.

7. Kabelverarbeitungsmaschine (100) nach einem der vorherigen Ansprüche, wobei das Magazin (150) eine Mehrzahl von Magazinelementen (150-1, 150-2) jeweils zum Aufnehmen einer der Kabel-Führungseinheiten (130-1...130-6) umfasst.

8. Kabelverarbeitungsmaschine (100) nach Anspruch 7, wobei mindestens eines der Magazinelemente (150-1, 150-2), insbesondere sämtliche Magazinelemente (150-1, 150-2), jeweils eine Spanneinrichtung (152), insbesondere einen Spannzylinder, zum Fixieren einer aufgenommenen Kabel-Führungseinheit (130-1...130-6) umfasst.

9. Kabelverarbeitungsmaschine (100) nach Anspruch 7 oder 8, wobei mindestens eines der Magazinelemente (150-1, 150-2), insbesondere sämtliche Magazinelemente (150-1, 150-2), jeweils eine mit einem Hubzylinder (155) gekoppelte Hubplatte (151) zum Erfassen einer Kabel-Führungseinheit (130-1...130-6), insbesondere der mindestens einen Koppelfläche (132, 133) der Kabel-Führungseinheit (130-1...130-6), umfasst.

10. Verfahren zum selektiven Aufnehmen einer Kabel-Führungseinheit (130-1...130-6) aus einem Magazin (150) einer Kabelverarbeitungsmaschine (100), wobei die Kabelverarbeitungsmaschine (100) einen kabelzuführungsseitigen Schwenkarm (120), das Magazin (150) und eine am Schwenkarm (120) angeordnete automatisch betätigbare Fixiereinrichtung (121) für die Kabel-Führungseinheit (130-1...130-6) umfasst, wobei das Verfahren umfasst:
- Empfangen eines Führungseinheit-Auswahlsignals, das die Kabel-Führungseinheit (130-1...130-6) im Magazin (150) bezeichnet;
- Verschwenken des Schwenkarms (120) zu einer zugehörigen Position relativ zum Magazin (150); und
- unter Verwendung der Fixiereinrichtung (121): Aufnehmen der ausgewählten Kabel-Führungseinheit (130-1...130-6) aus dem Magazin (150).
